# EUROPÄISCHE PATENTSCHRIFT

(11) **EP 0 436 090 B1**
(45) Veröffentlichungstag und Bekanntmachung des Hinweises auf die Patenterteilung: **14.06.1995**
(21) Anmeldenummer: 90121652.3
(22) Anmeldetag: 13.11.1990
(51) Int. Cl.: B60S 3/00, C02F 9/00

(54) **Verfahren zur Reinigung von Abwasser von Auto-Waschanlagen**
Process for the purification of waste water from car washing plants
Procédé pour la purification d'eau usée provenant des installations pour le lavage de voitures

(30) Priorität: 13.12.1989 DE 3941154
(43) Veröffentlichungstag der Anmeldung: 10.07.1991
(73) Patentinhaber: WESUMAT Fahrzeugwaschanlagen GmbH, D-86156 Augsburg (DE)
(72) Erfinder: Weigele, Gebhard, W-8902 Neusäss (DE); Decker, Wolfgang, W-8901 Zusmarshausen-Wollbach (DE)
(74) Vertreter: Liebau, Gerhard, Dipl.-Ing.

(56) Entgegenhaltungen:
- DE-A- 2 409 864
- PATENT ABSTRACTS OF JAPAN vol. 7, no. 223 (M-247)(1368) 04 Oktober 1983,& JP-A-58 118437 (TAKEUCHI TETSUKOU) 14 Juli 1983
- PATENT ABSTRACTS OF JAPAN vol. 9, no. 82 (C-275)(1805) 11 April 1985,& JP-A-59 216 684 (HINO JIDOSHA KOGYO) 6. Dezember 1984

## Beschreibung

Die Erfindung betrifft ein Verfahren zur Reinigung von Abwasser von Auto-Waschanlagen, bei welchem das Abwasser aus der Waschanlage einem ersten Absetzbehälter zugeführt wird, von diesem in mindestens einen zweiten Absetzbehälter geleitet wird, ein Teil des Wassers aus dem zweiten Absetzbehälter mit Luft vermischt und direkt zum Bodenbereich der Waschanlage zurückgeführt wird, wo es sich mit dem ungereinigten Abwasser der Waschanlage mischt, ein anderer Teil des vorgereinigten Wassers aus dem zweiten Absetzbehälter in einen Vorlagebehälter geleitet und von dort als Reinwasser den Wascheinrichtungen der Waschanlage zugeführt wird, wobei dem Wasser während des Reinigungskreislaufes auch ein Flockungsmittel beigemischt wird.

Im Schnitt fließt bei einer Portalwaschanlage für Pkw's rund 200 l Frischwasser durch die Wascheinrichtungen, um den Schmutz schonend vom Lack zu spülen und die Werterhaltung des Wagens zu sichern. Dieses Wasser ist aber bei weitem noch nicht so weit verschmutzt, daß es nicht wiederverwendet werden könnte. Gereinigt und mit etwa 10% Frischwasser versetzt erfüllt es ebenso wieder die Aufgabe wie vorher aus dem Trinkwassernetz stammendes Frischwasser. Aus diesem Grund wurden spezielle Wasserrückgewinnungsverfahren bzw. -anlagen für Auto-Waschanlagen entwickelt.

Bei einem bekannten Verfahren der eingangs erwähnten Art wird das gesamte zu reinigende Wasser aus dem ersten Absetzbehälter abgepumpt, mit einem Flockungsmittel vermischt und in den zweiten Absetzbehälter eingeleitet. Dieser zweite Absetzbehälter ist verhältnismäßig hoch und schmal ausgebildet. Durch das Flockungsmittel werden feine Feststoffteilchen dazu gebracht sich zu Gruppen zusammenzuballen, wodurch ihre Sinkgeschwindigkeit bei der Sedimentation erhöht wird.

Die Feststoffteilchen sinken zu dem trichterförmig ausgebildeten Boden des zweiten Absetzbehälters. Um den so entstehenden Schlamm aus dem zweiten Absetzbehälter zu entfernen, wird Luft über eine Injektordüse in ein Steigrohr eingepumpt, dessen Eintrittsöffnung sich in der Nähe des unteren Endes des zweiten Absetzbehälters befindet. Durch die Luft wird der Schlamm und ein Teil des Wassers in dem Steigrohr nach oben gefördert und über eine Verbindungsleitung zum Boden der Waschanlage zurückgeleitet. Dort vermischt sich das Schlamm-Wasser-Luft-Gemisch mit dem gerade beim Waschen eines Fahrzeuges entstandenen ungereinigten Abwasser und wird über die Wassersammelrinne der Waschanlage in den ersten Absetzbehälter zurückgeleitet. Dieses bekannte Reinigungsverfahren arbeitet jedoch mit einer unbefriedigenden Reinigungswirkung. Es muß nämlich der sich im zweiten Absetzbehälter absetzende Schlamm ständig aus dem Absetzbehälter entfernt werden. Hierdurch können sich die Feststoffteilchen nicht in Ruhe am Boden des Behälters absetzen und ein Teil der Feststoffteilchen verbleibt in dem Wasser und wird beim Überleiten des Wassers aus dem oberen Teil des zweiten Absetzbehälters auch in den Vorlagebehälter ungefiltert zurückgeleitet. Außerdem erfolgt die Beimengung von Flockungsmittel zwischen dem ersten und dem zweiten Absetzbehälter, so daß die Ausflockung nur im zweiten Absetzbehälter erfolgt. Wenn das Schlamm-Wasser-Luft-Gemisch wieder in die Waschanlage zurückfließt, kann es sich dort zwar mit dem ungereinigten Abwasser vermischen, jedoch ist bis dahin das Flockungsmittel verbraucht.

Eine Abwasserreinigungsanlage nach der SU-A-1 182 000 arbeitet ähnlich wie vorbekannte Anlagen, wobei jedoch das Beimischen von Luft, Adsorptionsmittel und Flockungsmittel überhaupt nicht vorgesehen ist. Wenn das Wasser in einem zweiten Absetzbehälter einen vorbestimmten Stand erreicht hat, wird durch eine Pumpe das gesamte vorgereinigte Wasser über Leitungen sowie Filter in einen Vorlagebehälter gepumpt.

Von dort gelangt es über eine weitere Leitung zur Waschanlage. Immer nur dann, wenn das dem Vorlagebehälter vorgeschaltete Filter verschmutzt ist und gereinigt werden muß, wird Reinwasser aus dem Vorlagehehälter in das Filter und von dort der Filterschlamm über eine Rückleitung in den ersten Absetzbehälter zurückgepumpt. Ferner wird zur Entfernung des Schmutzes aus den Absetzbehältern von Zeit zu Zeit ein Schieber am Boden der Absetzbehälter geöffnet, so daß der Schmutz in den Behälter einer Druckauswurfvorrichtung gelangt. Von dort wird der Schmutz mittels Druckluft in einen Schmutzabsetzbunker gepreßt.

Der Erfindung liegt die Aufgabe zugrunde, ein Verfahren zur Reinigung von Abwasser von Auto-Waschanlagen der eingangs genannten Art aufzuzeigen, mit dem unter Verwendung einfacher Mittel zuverlässig eine bessere Rinigungswirkung erzielt wird, so daß das gereinigte Wasser in der Waschanlage wie Frischwasser problemlos wiederverwendet und gegebenenfalls auch als einwandfrei gereinigtes Wasser in die Kanalisation abgegeben werden kann.

Dies wird nach der Erfindung dadurch erreicht, daß kontinuierlich ein Teil des vorgereinigten Wassers aus dem zweiten Absetzbehälter abgepumpt, mit Luft vermischt und zum Bodenbereich der Waschanlage zurückgeführt wird, daß diesem Teil des Wassers Adsorptionsmittel und Flockungsmittel nur beigemischt wird, wenn zur Versorgung der Wascheinrichtungen Reinwasser aus dem Vorlagebehälter entnommen wird, und daß ein anderer Teil des im zweiten Absetzbehälter vorgereinigten Wassers über einen Filter dem Vorlagebehälter zugeführt wird.

Die Besonderheit des erfindungsgemäßen Verfahrens besteht darin, daß kontinuierlich nur ein Teil des im zweiten Absetzbehälter bereits weitgehend gereinigten Wassers aus diesem abgepumpt und dann dieser Teil mit reinigungsaktiven Substanzen, nämlich Flockungsmittel, Adsorptionsmittel und Luft vermischt wird, wenn zur Versorgung der Wascheinrichtung Reinwasser aus dem Vorlagebehälter entnommen wird. Da das aus dem zweiten Absetzbehälter entnommene Wasser bereits weitgehend vorgereinigt ist und nur wenige Feststoffteilchen enthält, wird durch diese nur ein sehr geringer Teil der reinigungsaktiven Substanzen verbraucht, insbesondere auch deshalb, weil das Beimischen von Adsorptionsmittel und Flockungsmittel immer nur dann erfolgt, wenn Reinwasser aus dem Vorlagebehälter entnommen wird. Diesen Verbrauch kann man noch dadurch reduzieren, daß man die Menge des aus dem Vorlagebehälter entnommenen Reinwassers mißt und die Zugabe von Flockungsmittel und Adsorptionsmittel entsprechend der entnommenen Reinwassermenge steuert. Die Reinwassermenge entspricht in etwa auch der nach dem Waschvorgang anfallenden Abwassermenge und demzufolge wird jeweils immer nur so viel Flockungsmittel und Adsorptionsmittel zugeführt und verbraucht, wie es zur Reinigung der anfallenden Abwassermenge erforderlich ist. Das aus dem zweiten Absetzbehälter entnommene, vorgereinigte Wasser wird als Träger- und Verteilungsmittel für die reinigungsaktiven Substanzen verwendet. Da diese bereits in einer größeren Wassermenge verteilt sind, können sie sich am Bodenbereich der Waschanlage, insbesondere in deren Sammelrinne, mit dem beim Waschen eines Fahrzeuges entstandenen ungereinigten Abwasser gleichmäßig und innig vermischen. Hierdurch können die Adsorptionsmittel und Flockungsmittel, die bis dahin weitgehend unverbraucht sind, intensiv auf das ungereinigte Abwasser einwirken. Die beigemengte Luft wird zusammen mit dem Wasserstrom in den ersten Absetzbehälter geleitet und hat dort vorteilhafte Wirkungen bei der biologischen Reinigung des Abwassers. Durch den ständigen Kreislauf eines Teiles des vorgereinigten Wassers wird diesem auch ständig Luft beigemischt. Diese Luft gelangt mit dem in den ersten Absetzbehälter zurückströmenden Wasser in diesen und von dem ersten Absetzbehälter auch in den zweiten. Hierdurch ist eine kontinuierliche Sauerstoffversorgung der Bakterien sichergestellt und es wird damit auch die Bildung unangenehmer Gerüche vermieden. Durch die Zugabe von Adsorptionsmittel, besonders geeignet ist Aktivkohlepulver, wird der größte Teil der im Abwasser gelösten Verunreinigungen adsorbiert. Es wird damit eine beträchtliche Reduzierung des chemischen Sauerstoff-Bedarfs und auch des Detergentiengehaltes erreicht. Das Adsorptionsmittel sorgt für eine vollkommene Geruchsbeseitigung im Wasser, eine Herabsetzung des Phenolgehaltes bis auf Restwerte, eine totale Abscheidung von gesättigten Kohlenwasserstoffen, deren große Moleküle schwer wasserlöslich sind, Entfernung von Schädlingsbekämpfungsmitteln und Beseitigung des damit verbundenen Geschmacks, Adsorption von Schadstoffen, die den biologischen Abbau hemmen und für eine große Oberfläche zur Bildung eines biologischen Nährbodens bei der biologischen Reinigung. Durch das Flockungsmittel werden feine Feststoffteilchen dazu gebracht, sich zu Gruppen zusammenzuballen, wodurch ihre Sinkgeschwindigkeit bei der Sedimentation erhöht wird. Die Sedimentation erfolgt in erster Linie in dem ersten Absetzbehälter, wo das Flockungsmittel noch voll wirksam ist. Auch die verbrauchte Aktivkohle wird sedimentiert und sinkt im ersten Absetzbehälter zu Boden. Ein Teil der Sedimentation setzt sich auch in dem zweiten Absetzbehälter fort. Durch die Verwendung von zwei getrennten Absetzbehältern wird auch eine gewisse Beruhigung der Wasserbewegung in den beiden Behältern, insbesondere im zweiten Absetzbehälter, gewährleistet und damit die Sedimentation gefördert. Die Adsorption über Aktivkohle ist ein rein physikalischer Vorgang. Auf der großen Oberfläche der Aktivkohle kann jedoch bei gleichzeitigem Sauerstoffeintrag auch die biologische Reinigung begünstigt werden. Hierbei bauen aerobe Bakterien die im Abwasser gelösten und kolloidalen Schmutzstoffe ab. Die aeroben Bakterien decken hierbei ihren Wasserstoffbedarf aus dem wasserstoffhaltigen Abwasser. Die für die Fortpflanzung der Bakterien erforderliche Zellteilung erfolgt in den Absetzbehältern und die von den Bakterien ausgeschiedenen unlöslichen Abbauprodukte sedimentieren in den beiden Absetzbehältern. Das im zweiten Absetzbehälter befindliche, vorgereinigte Wasser hat bereits eine gute Qualität. Um jedoch aus diesem Wasser die Feststoffteilchen weitgehend zu entfernen, wird ein Teil des vorgereinigten Wassers über einen Filter dem Vorlagebehälter zugeführt.

Weitere vorteilhafte Durchführungsmöglichkeiten des Verfahrens sind in den Unteransprüchen gekennzeichnet.

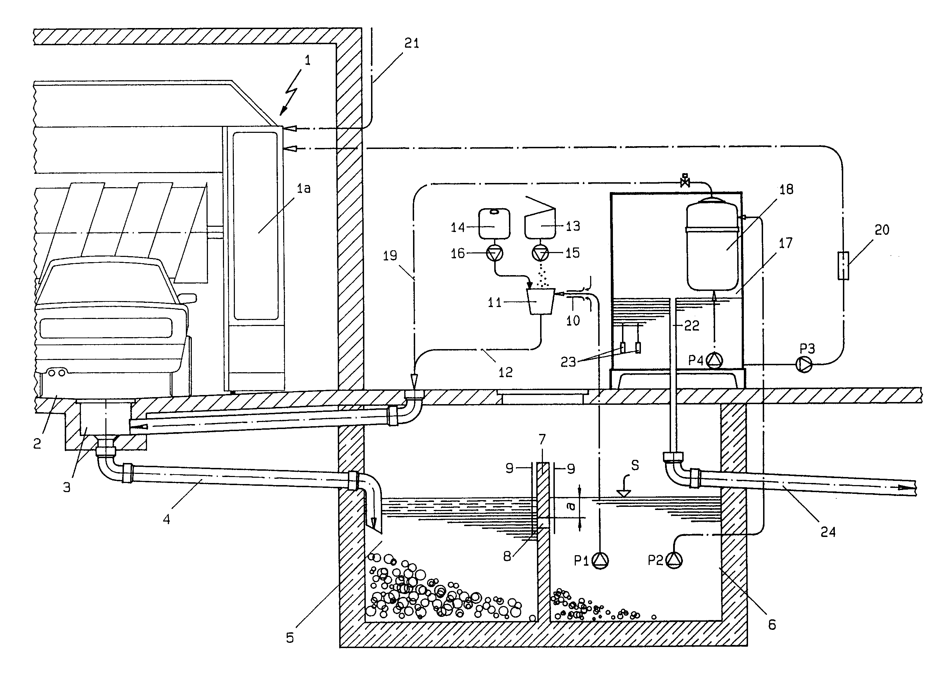

Die Erfindung ist anhand eines in der Zeichnung dargestellten Ausführungsbeispieles einer zur Durchführung des Verfahrens vorteilhaften Abwasserreinigungsanlage näher erläutert.

In der Zeichnung ist mit 1 eine Pkw-Portalwaschanlage bezeichnet, die in üblicher Weise als Wascheinrichtung mehrere rotierende Waschbürsten, Sprühbögen zum Aufbringen von Shampoo, Spülwasser und Wachs sowie auch gegebenenfalls Hochdruckreinigungsdüsen aufweisen kann. Das beim Waschen eines Autos anfallende Abwasser fließt vom Boden 2 der Waschanlage in eine Sammelrinne 3 und wird von dort über die Leitung 4 in einen ersten Absetzbehälter 5 geleitet. Speziell bei Portalwaschanlagen fällt beim Waschen und anschließenden Wachsen des Autos Abwasser an, welches eine Mischung aus Shampoo und Wachs enthält und deshalb besonders schwierig zu reinigen ist.

Dem ersten Absetzbehälter 5 ist ein zweiter Absetzbehälter 6 nachgeschaltet, wobei beide Behälter auch dadurch gebildet sein können, daß in einem größeren unterirdischen Absetzbecken eine Trennwand 7 vorgesehen ist, welche das Absetzbecken in zwei voneinander getrennte Räume teilt. Gegebenenfalls können auch mehrere Trennwände vorgesehen sein, um die Anzahl der hierdurch gebildeten Absetzbehälter noch zu vergrößern.

In der Trennwand 7 ist mindestens eine Überströmöffnung 8 vorgesehen, die vorteilhaft mit Abstand a unterhalb des niedrigsten Wasserspiegels S angeordnet ist. Auf diese Weise können in dem ersten Absetzbehälter 5 Leichtflüssigkeiten, wie Öl, Benzin und dgl. abgeschieden werden, da sich diese Leichtflüssigkeiten in dem Raum oberhalb der Überströmöffnung durch Aufschwimmen ansammeln und ähnlich wie bei Ölabscheidern abgeschöpft werden können. Man kann infolgedessen auf gesonderte Öl- (Koaleszenz-) Abscheider verzichten.

Im Bereich der Überströmöffnung 8 sind zwei Stecksiebe 9 vorgesehen, mit deren Hilfe Schwebstoffe aus dem von dem Absetzbehälter 5 in den Absetzbehälter 6 überströmenden Wasser entfernt werden.

In den Absetzbehältern 5 und 6 wird das Abwasser durch Sedimentation und biologischen Abbau gereinigt. Ein Teil des so vorgereinigten Wasser wird aus dem zweiten Absetzbehälter 6 durch eine erste Pumpe P1 abgepumpt und durch einen Injektor 10 geleitet. Durch diesen Injektor wird dem Wasser Luft zugemischt. Das auf diese Weise mit Sauerstoff angereicherte Wasser wird über einen Mischbehälter 11 und eine Verbindungsleitung 12 dem Boden der Waschanlage 1, im speziell gezeigten Fall der Sammelrinne 3 zugeleitet. Es strömt dann aus der Sammelrinne 3 kontinuierlich in den ersten Absetzbehälter 5 zurück. Auf diese Weise wird eine Sauerstoffversorgung der in den Behältern 5 und 6 enthaltenen Bakterien sichergestellt.

In einem Vorratsbehälter 13 ist ein Adsorptionsmittel, vorzugsweise Aktivkohlepulver, enthalten. Ein zweiter Vorratsbehälter 14 dient zur Aufnahme von Flockungsmittel. Über Dosierpumpen 15 und 16 könnnen bei Bedarf Aktivkohlepulver und Flockungsmittel dosiert in den Mischbehälter 11 gegeben werden.

Es ist ferner ein Vorlagebehälter 17 für Reinwasser vorgesehen. Eine zweite Pumpe P2 pumpt vorgereinigtes Wasser aus dem zweiten Absetzbehälter 6 über einen Filter 18 in den Vorlagebehälter 17. Die Reinigung dieses Filters 18 erfolgt bei Bedarf mittels der Pumpe P4. Der vom Filter zurückgehaltene Schlamm wird dann über die Rückspülleitung 19 abgeleitet.

Das im Vorlagebehälter 17 enthaltene Wasser wird zum Waschen eines Autos mittels der Pumpe P3 der Wascheinrichtung 1a zugeführt. Sobald die Wascheinrichtung 1a Wasser aus dem Vorlagebehälter 17 entnimmt, wird auch Adsorptionsmittel und Flockungsmittel über die Dosierpumpen 15, 16 in den Mischbehälter 11 eingeleitet. Zweckmäßig wird die entnommene Reinwassermenge mittels des Durchflußmessers 20 gemessen und die zugegebene Menge an Adsorptionsmittel und Flockungsmittel dementsprechend gesteuert. Das Adsorptionsmittel und das Flockungsmittel vermischen sich in dem Mischbehälter 11 mit dem sauerstoffangereicherten Wasser. Eine weitere Durchmischung erfolgt in der Leitung 12. In der Sammelrinne 3 findet dann eine intensive Vermischung des während des Waschvorganges angefallenen ungereinigten Abwassers mit dem durch die Leitung 12 zugeführten vorgereinigten und mit Sauerstoff, Adsorptionsmittel und Flockungsmittel angereicherten Wasser statt. Das Aktivkohlepulver adsorbiert die Detergentien und sonstige Schadstoffe aus dem Abwasser. Weitere Schmutzfracht wird durch das Flockungsmittel ausgeflockt und sedimentiert im ersten Absetzbehälter 5. Schwebstoffe werden durch die Stecksiebe 9 zurückgehalten. Weitere Sedimentation findet im zweiten Absetzbehälter 6 statt.

Erfahrungsgemäß ist bei automatischen Waschanlagen ein Wasserverlust von etwa 10% des gesamten zugeführten Wasserbedarfs zu verzeichnen. Um den Wasserverlust auszugleichen wird aus dem Wasserleitungsnetz 21 Frischwasser entnommen und dieses zweckmäßig dem letzten Spülbogen der Waschanlage zugeführt. Da jedoch der Wasserverlust schwankt, ist es zweckmäßig, wenn man dem letzten Sprühbogen etwa 20% Frischwasser zuführt. Hierdurch wird sichergestellt, daß die Gesamtwassermenge nicht abnimmt. Wenn bei Wasserbedarf 20% Frischwasser zugeführt wird, durchschnittlich aber nur ein Wasserverlust von 10% entsteht, dann muß der Überschuß abgeleitet werden. Dies erfolgt über ein im Vorlagebehälter 17 vorgesehenes Überlaufrohr 22 oder dgl., welches mit dem Abwasserkanal 24 in Verbindung steht. Es wird also nur sorgfältig gereinigtes Wasser aus dem Vorlagebehälter 17 in das öffentliche Kanalnetz abgegeben.

Im Vorlagebehälter 17 können außerdem Sonden 23 zur Steuerung des pH-Wertes und des elektrischen Leitwertes installiert sein.

Das erfindungsgemäße Verfahren eignet sich nicht nur für Portalwaschanlagen sondern auch für Waschstraßen mit kontinuierlicher Weiterbewegung der Fahrzeuge, auch für Waschplätze, an denen die Fahrzeugreinigung mit Hochdruckreinigern erfolgt, oder für die Reinigung der Abwässer aus Kraftfahrzeug-Werkstätten.

## Patentansprüche

1. Verfahren zur Reinigung von Abwasser von Auto-Waschanlagen, bei welchem des Abwasser aus der Waschanlage (1) einem ersten Absetzbehälter (5) zugeführt wird, von diesem in mindestens einen zweiten Absetzbehälter (6) geleitet wird, ein Teil des gereinigten Wassers aus dem zweiten Absetzbehälter mit Luft vermischt und direkt zum Bodenbereich (2) der Waschanlage zurückgeführt wird, wo es sich mit dem ungereinigten Abwasser der Waschanlage (1) mischt, ein anderer Teil des vorgereinigten Wassers aus dem zweiten Absetzbehälter (6) in einen Vorlagebehälter (17) geleitet und von dort als Reinwasser den Wascheinrichtungen (1a) der Waschanlage (1) zugeführt wird, wobei dem Wasser während des Reinigungskreislaufes auch ein Flockungsmittel (14) beigemischt wird, **dadurch gekennzeichnet,** daß kontinuierlich ein Teil des vorgereinigten Wassers aus dem zweiten Absetzbehälter (6) abgepumpt, mit Luft vermischt und zum Bodenbereich (2) der Waschanlage (1) zurückgeführt wird, daß diesem Teil des Wassers Adsorptionsmittel (13) und Flockungsmittel (14) nur beigemischt wird, wenn zur Versorgung der Wascheinrichtungen (1a) Reinwasser aus dem Vorlagebehälter (17) entnommen wird, und daß ein anderer Teil des im zweiten Absetzbehälter (6) vorgereinigten Wassers über einen Filter (18) dem Vorlagebehälter zugeführt wird.

2. Verfahren nach Anspruch 1, **dadurch gekennzeichnet,** daß die Menge des aus dem Vorlagebehälter (17) entnommenen Reinwassers gemessen und die Zugabe von Flockungsmittel (14) und Adsorptionsmittel (13) entsprechend der entnommenen Reinwassermenge erfolgt.

3. Verfahren nach Anspruch 1 oder 2, **dadurch gekennzeichnet,** daß als Adsorptionsmittel (13) Aktivkohle verwendet wird.

4. Verfahren nach Anspruch 1, **dadurch gekennzeichnet,** daß die Luft mittels eines Injektors (10) dem vorgereinigten Wasser beigemischt wird.

5. Verfahren nach Anspruch 1, **dadurch gekennzeichnet,** daß das Abwasser in den Absetzbehältern (5,6) durch Zugabe von Bakterien biologisch gereinigt wird.

6. Verfahren nach Anspruch 1, **dadurch gekennzeichnet,** daß in dem ersten Absetzbehälter (5) Leichtflüssigkeiten abgeschieden werden, indem das Wasser von dem ersten Absetzbehälter in den zweiten Absetzbehälter (6) durch eine Überströmöffnung (8) geleitet wird, die mit Abstand unterhalb des niedrigsten Wasserspiegels in den Absetzbehältern angeordnet ist.

7. Verfahren nach Anspruch 1 oder 6, **dadurch gekennzeichnet,** daß beim Überströmen des Wassers von dem ersten (5) in den zweiten Absetzbehälter (6) das Wasser zur Entfernung von Schwebstoffen durch Stecksiebe (9) geleitet wird.

8. Verfahren roch Anspruch 1, **dadurch gekennzeichnet,** daß als Absetzbehälter (5,6) unterirdische Absetzbecken verwendet werden.

## Claims

1. A process for purifying waste water from car-washing plants, in which the waste water from the washing plant (1) is fed into a first settling tank (5), is passed therefrom into at least one second settling tank (6), a portion of the purified water from the second settling tank is mixed with air and fed back directly to the ground region (2)of the washing plant, where it mixes with the un-purified waste water from the washing plant (1), another portion of the pre-purified water is fed from the second settling tank (6) into a collecting container (17) and is fed from thence as clean water to the washing devices (1a) of the washing plant (1), wherein a flocculating agent (14) is also mixed in to the water in the purifying circuit, characterized in that a portion of the pre-purified water is pumped continuously out of the second settling tank (6), is mixed with air and fed back to the ground region (2) of the washing plant (1), in that an absorption agent (13) and flocculating agent (14) are only mixed in with this portion of the water when clean water is taken out of the collecting tank (17) to supply the washing devices (1a), and in that another portion of the pre-purified water in the second settling tank (6) is fed through a filter (18) to the collecting tank.

2. A process according to claim 1, characterized in that the quantity of the clean water taken from the collecting tank (17) is measured and the addition of flocculating agent (14) and absorbtion agent (13) is effected in accordance with the amount of clean water removed.

3. A process according to claim 1 or 2, characterized in that activated carbon is used as the absorption agent (13).

4. A process according to claim 1, characterized in that the air is mixed in with the pre-purified water by means of an injector (10).

5. A process according to claim 1, characterized in that the waste water in the settling tanks (5, 6) is biologically purified by the addition of bacteria.

6. A process according to claim 1, characterized in that light liquids are separated out in the first settling tank (5) in that the water from the first settling tank is fed into the second settling tank (6) through a transfer opening (8) which is arranged spaced below the lowest water level in the settling tanks.

7. A process according to claim 1 or 6, characterized in that the water is passed through drop-in sieves (9) as it flows from the first (5) into the second settling tank (6), to remove floating materials.

8. A process according to claim 1, characterized in that underground settling basins are used as the settling tanks (5, 6).

## Revendications

1. Procédé d'épuration d'eau usée de stations de lavage de voitures, selon lequel on amène l'eau usée de la station de lavage (1) à un premier récipient de décantation (5), on la dirige de celui-ci dans au moins un deuxième récipient de décantation (6), on mélange une partie de l'eau épurée venant du deuxième récipient de décantation avec de l'air et on la renvoie directement vers la zone du sol (2) de la station de lavage, où elle se mélange avec l'eau usée non épurée de la station (1), on dirige une autre partie de l'eau pré-épurée venant du deuxième récipient de décantation (6) dans un récipient collecteur (17) et on l'amène de là comme eau propre aux dispositifs de lavage (1a) de la station (1), procédé dans lequel on ajoute également en mélange un floculant (14) à l'eau pendant sa circulation dans le circuit d'épuration, caractérisé en ce que l'on retire en continu, par pompage, une partie de l'eau pré-épurée du deuxième récipient de décantation (6), on la mélange avec de l'air et on la retourne vers la zone du sol (2) de la station de lavage (1), que l'on ajoute seulement de l'adsorbant (13) et du floculant (14) en mélange à cette partie de l'eau lorsque de l'eau propre est prélevée du récipient collecteur (17) pour alimenter les dispositifs de lavage (1a), et que l'on envoie une autre partie de l'eau pré-épurée contenue dans le deuxième récipient de décantation (6) à travers un filtre (18) au récipient collecteur.

2. Procédé selon la revendication 1, caractérisé en ce que l'on mesure la quantité d'eau propre prélevée du récipient collecteur (17) et on opère l'addition de floculant (14) et d'adsorbant (13) en conformité avec la quantité d'eau propre prélevée.

3. Procédé selon la revendication 1 ou 2, caractérisé en ce que l'on utilise du charbon actif comme adsorbant (13).

4. Procédé selon la revendication 1, caractérisé en ce que l'on ajoute l'air en mélange à l'eau pré-épurée au moyen d'un injecteur (10).

5. Procédé selon la revendication 1, caractérisé en ce que l'on épure l'eau usée dans les récipients de décantation (5, 6) par voie biologique par addition de bactéries.

6. Procédé selon la revendication 1, caractérisé en ce que l'on sépare des liquides légers dans le premier récipient de décantation (5) en dirigeant l'eau du premier récipient de décantation dans le deuxième récipient de décantation (6) à travers une ouverture de débordement (8) placée à distance au-dessous du niveau d'eau le plus bas dans les récipients de décantation.

7. Procédé selon la revendication 1 ou 6, caractérisé en ce que l'on fait passer l'eau débordant du premier (5) dans le deuxième récipient de décantation (6) à travers des tamis enfichés (9) en vue de l'élimination de matières en suspension.

8. Procédé selon la revendication 1, caractérisé en ce que l'on utilise des bassins de décantation en sous-sol comme récipients de décantation (5, 6).
